# EUROPÄISCHE PATENTSCHRIFT

(11) **EP 0 909 611 B1**
(45) Veröffentlichungstag und Bekanntmachung des Hinweises auf die Patenterteilung: **30.01.2002**
(21) Anmeldenummer: 97810774.6
(22) Anmeldetag: 14.10.1997
(51) Int. Cl.: B24B 53/00, B23H 5/04, B24B 49/16

(54) **Verfahren zum Schleifen von Oberflächen von Werkstücken und Vorrichtung zur Durchführung des Verfahrens**
Method for grinding the surfaces of workpieces and apparatus for carrying out the method
Procédé pour meuler les surfaces de pièces et dispositif pour la mise en oeuvre du procédé

(43) Veröffentlichungstag der Anmeldung: 21.04.1999
(73) Patentinhaber: Agathon A.G. Maschinenfabrik, CH-4500 Solothurn (CH)
(72) Erfinder: Kramer, Dietmar, 8045 Zürich (CH)
(74) Vertreter: BOVARD AG - Patentanwälte

(56) Entgegenhaltungen:
- EP-A- 0 640 438
- US-A- 5 044 125

## Beschreibung

Die vorliegende Erfindung bezieht sich auf ein Verfahren zum Schleifen von Oberflächen von Werkstücken gemäss dem Oberbegriff des Patentanspruches 1 sowie auf eine Vorrichtung zur Durchführung des Verfahrens gemäß Oberbegriff des Patentanspruchs 9.

An derartige Schleifverfahren, insbesondere zum Schleifen von Wendeschneidplatten, werden immer höhere Anforderungen bezüglich der Wirtschaftlichkeit, an die erzielbare Werkstückoberflächenqualität und an die Genauigkeit gestellt. Dies bedeutet, insbesondere weil die entsprechenden Werkstücke aus einem sehr harten Material gefertigt sind, dass konventionelle Schleifscheiben diese Anforderungen nicht mehr in genügendem Masse erfüllen können. Derartige konventionelle Schleifscheiben weisen ein Bindungssystem aus Kunstharz oder Keramik auf, mit welchem die Schleifkörner gehalten sind. Derartige Schleifscheiben müssen nach einer kurzen Einsatzzeit durch einen Abrichtvorgang erneut geschärft werden. Durch den starken Verschleiss der Schleifscheiben und dem relativ häufigen Abrichtvorgang können die vorgängig genannten Forderungen nicht erfüllt werden.

Für derartige Schleifverfahren sind metallgebundene Schleifscheiben besser geeignet. Gegenüber den Schleifscheiben mit anderen Bindungstypen weisen diese Schleifscheiben grosse Vorteile auf, die sich insbesondere durch sehr hohe Kornhaltekräfte der Bindung, einem vergrösserten Kornüberstand von 30 bis 50 % des Korndurchmessers, einem grösseren Spanraum und einem verschleissfesteren Bindungssystem auszeichnen. Des weiteren ist auch die Wärmeableitung wegen des metallischen Bindungsmaterials optimal.

Diese Metallbindung hat aber auch einen grossen Nachteil. Aufgrund der erhöhten Verschleissfestigkeit des Bindungssystems ist der Selbstschärfeeffekt gestört. Die Metallbindung der Schleifscheibe kann durch Abrasion der abgetragenen Werkstoffpartikel nicht mehr zurückgesetzt werden. Die stumpfen Schleifkörner werden von der Schleifscheibenbindung nicht mehr freigegeben, die ganze Schleifscheibe verstumpft und der Schleifprozess kommt sehr bald zum Erliegen. Die Wiederherstellung der optimalen Schleifscheibentopografie muss durch einen Schärfeprozess erfolgen, der hohe Nebenzeiten zur Folge hat und damit die Wirtschaftlichkeit des gesamten Schleifprozesses verschlechtert.

Aus der EP-A-0 576 937 ist ein Verfahren und eine Vorrichtung zum Schleifen einer Spiegeloberfläche mit einer Schleifscheibe bekannt, welche Schleifscheibe eine metallische Bindung aufweist. Die Schleifscheibe wird hierbei während des Schleifvorgangs geschärft, indem zwischen einer Elektrode, die der Schleifoberfläche der Schleifscheibe benachbart angeordnet ist, und der Schleifscheibe ein Strom durchgeleitet wird, so dass die Schleifscheibe mit Hilfe einer leitfähigen Lösung elektrolytisch geschärft werden kann.

Mit dieser Vorrichtung und dem Verfahren wird wohl die Qualität der Oberfläche der Schleifscheibe während des Schleifvorgangs der Spiegeloberfläche verbessert, es lässt sich aber nicht feststellen, ob die Schleifscheibe mehr als es der Schleifvorgang erfordern würde, geschärft wird, was zu einem übermässigen Verbrauch der Schleifscheibe führen würde, es ist aber auch nicht erkennbar, ob die Schleifscheibe in einem Zustand ist, damit ein optimaler Schleifvorgang durchgeführt werden kann.

Gleichzeitig ist die Erzielung einer Spiegeloberflächenqualität nur durch Einlagerung von Festschmierstoffen in Form von Oxiden, Hydroxiden und Stoffen des Kühlschmiermittels in die Spanräume der Schleifscheibe möglich. Die Spanräume der Schleifscheibe werden dadurch stark verkleinert, wodurch der Transport von Kühlschmiermittel in die Schleifkontaktzone und Werkstückpartikel aus der Schleifkontaktzone nur mehr eingeschränkt möglich ist. Kühlschleifende abtragsleistungsintensive Schleifprozesse, charakterisiert durch sehr niedrige Prozesskräfte und stabile Schärfezustände über einen sehr langen Zeitraum, können mit der Vorrichtung und dem Verfahren gemäss der EP-A-0 576 937 nicht realisiert werden.

Eine Aufgabe der vorliegenden Erfindung besteht nun darin, ein Verfahren zu schaffen, mit welchem der Schärfevorgang und damit auch der Schleifvorgang optimiert werden kann, wodurch die Wirtschaftlichkeit des Bearbeitungsverfahrens, die Oberflächengüte und die Genauigkeit der geschliffenen Werkstücke und die Standzeit der Schleifscheiben verbessert wird.

Erfindungsgemäss erfolgt die Lösung dieser Aufgabe durch die im Anspruch 1 oder 9 aufgeführten Merkmale.

Durch das Messen von aussagekräftigen Grössen über den Schärfezustand der Schleifscheibe kann die elektrochemische Behandlung so angepasst werden, dass der Schärfezustand der Schleifscheibe über eine lange Zeitdauer konstant ist.

In vorteilhafter Weise wird eine von einem Lieferanten angelieferte Schleifscheibe vor dem ersten Schleifeinsatz einer elektrochemischen Vorbehandlung unterzogen. Damit wird der Schärfezustand der Schleifscheibe auf den gewünschten Stand gebracht.

Ein weiterer Vorteil wird erreicht, wenn während des Schleifvorgangs die Grösse der durch die Schleifscheibe auf das zu schleifende Werkstück senkrecht wirkende Normalkraft und die tangential wirkende Tangentialkraft gemessen wird. Durch die Division der so gemessenen Normalkraft durch die entsprechende Tangentialkraft wird ein Wert erhalten, der unabhängig ist von der Grösse der Schleifkontaktzone. Dieser Wert ist aussagekräftig über den Schärfezustand der Schleifscheibe, so dass aufgrund des Verlaufes dieses Wertes die elektrochemische Behandlung der Schleifscheibe durch Veränderung der Stromstärke geregelt werden kann.

Eine weitere vorteilhafte Ausgestaltung der Erfindung besteht darin, dass nach Beendigung eines Schleifzyklus und dem Ablauf der Ausfunkzeit die Restnormalkraft gemessen wird, die mit einer vorgegebenen Restnormalkraft verglichen wird. Wenn die gemessene Restnormalkraft nach Ablauf der vorgegebenen Ausfunkzeit höher ist als die vorgegebene Restnormalkraft, kann der Wert, der durch die Division der Normalkraft durch die Tangentialkraft erhalten wird, erniedrigt werden. Dies hat zur Folge, dass die elektrochemische Behandlung länger aktiviert wird, die Schleifscheibe wird geschärft.

Wenn die gemessene Restnormalkraft vor Ablauf der vorgegebenen Ausfunkzeit kleiner ist als die vorgegebene Restnormalkraft, kann der Vorgang vorzeitig beendet werden. Durch diese Vorgänge erhält man eine Optimierung des Schleifvorgangs.

Eine weitere Aufgabe der vorliegenden Erfindung besteht darin, eine Vorrichtung zur Durchführung des Verfahrens zu schaffen, mit welcher der gewünschte Schleifvorgang und die elektrochemische Behandlung der Schleifscheibe in optimaler Weise ausgeführt werden kann, was erfindungsgemäss durch die kennzeichnenden Merkmale des Anspruchs 9 erreicht wird.

In vorteilhafter Weise ist die Metallbindung der Schleifscheibe, in welcher die Schleifkörner gebunden sind, aus einem Binder aus Bronze und einem Füllstoff aus Karboneisen zusammengesetzt. Der unedlere metallische Füllstoff wird bei der elektrochemischen Behandlung bevorzugt aufgelöst, wodurch mit dem edleren Binder, welcher für die Festigkeit der Schleifscheibe zuständig ist, erreicht wird, durch die elektrochemische Schärfung eine Schleifscheibentopografie herzustellen, welche sehr hohe Kornüberstände und Spanräume aufweist.

Eine weitere vorteilhafte Ausgestaltung der Erfindung besteht darin, dass das Messmittel zur Messung der Normalkraft einen piezoelektrischen Sensor umfasst, der das Signal an die Rechner- und Regeleinrichtung überträgt, und dass das Messmittel zur Messung der Tangentialkraft die Leistung des Antriebsmotors der Schleifscheibe ermittelt und das Signal an die Rechner- und Regeleinrichtung übermittelt, wo die Tangentialkraft berechnet werden kann. Dadurch wird ein einfacher Aufbau der Vorrichtung erreicht.

Um eine optimale elektrochemische Behandlung erreichen zu können, wird das elektrolytische Kühlschmiermittel durch Bohrungen, die in der Elektrode angebracht sind, in den Spalt zwischen der Schleifscheibe und der Elektrode geleitet. Gleichzeitig wird mit einer Freistrahldüse das elektrolytische Kühlschmiermittel in die Schleifkontaktzone zwischen Werkstück und Schleifscheibe eingesprüht, wodurch eine optimale Kühlung erreicht wird.

In vorteilhafter Weise sind die Bohrungen in der Elektrode auf benachbarten bogenförmigen Linien und versetzt zueinander angeordnet, wodurch gewährleistet ist, dass der gesamte Spaltbereich in optimaler Weise mit dem elektrolytischen Kühlschmiermittel praktisch ausgefüllt ist.

In vorteilhafter Weise kann des weiteren noch eine Hochdruckreinigungsdüse vorgesehen sein, welche in die Elektrodenhalterung integriert ist, und durch welche das elektrolytische Kühlschmiermittel direkt auf die Schleifscheibe mit Hochdruck aufgesprüht wird. Dadurch wird ein Reinigungseffekt der Schleifscheibe erreicht.

Weitere vorteilhafte Ausgestaltungen der Erfindung ergeben sich aus den weiteren abhängigen Ansprüchen.

Das erfindungsgemässe Verfahren und eine Vorrichtung zur Durchführung dieses Verfahrens werden nachfolgend mit Bezugnahme auf die beiliegende Zeichnung beispielhaft näher erläutert.

Es zeigt
Fig. 1 in schematischer Darstellung die Vorrichtung zum Schleifen von Werkstücken mit Messelementen der Rechner- und Regeleinrichtung und dem Stromerzeugungsmittel;
Fig. 2 in schematischer Darstellung eine Ansicht auf die Elektrode, zum Teil im Schnitt, und die Schleifscheibe;
Fig. 3 eine Teilansicht auf die Oberfläche der Elektrode, die der Schleifscheibe zugewandt ist;
Fig. 4 eine Schnittdarstellung (vergrössert) durch den Schleifbelag einer vom Hersteller gelieferten Schleifscheibe;
Fig. 5 eine Schnittdarstellung (vergrössert) durch den Schleifbelag der Schleifscheibe, die konventionell abgerichtet worden ist;
Fig. 6 eine Schnittdarstellung (vergrössert) durch den Schleifbelag einer elektrochemisch vorbehandelten Schleifscheibe;
Fig. 7 eine Schnittdarstellung (vergrössert) durch den Schleifbelag einer im Einsatz stehenden, elektrochemisch behandelten Schleifscheibe;
Fig. 8 eine grafische Darstellung des bezogenen Kräfteverlaufs bei konventionellen Schleifprozessen und dem erfindungsgemässen Schleifverfahren mit elektrochemischer Behandlung;
Fig. 9 eine grafische Darstellung des Verlaufes der Restnormalkraft des erfindungsgemässen Verfahrens und der Restnormalkraft des konventionellen Verfahrens;
Fig. 10 eine grafische Darstellung des Verlaufs der Normalkraft und der Tangentialkraft und des daraus ermittelten Wertes k;
Fig. 11 ein Blockschaltbild der Regelung des Verfahrens mit Ausfunkzeit-Minimierungsmodul;
Fig. 12 eine grafische Darstellung des Wertes k des geregelten und des ungeregelten Schleifverfahrens;
Fig. 13 eine grafische Darstellung des Verlaufs der Normalkraft während der Ausfunkzeit;
Fig. 14 eine grafische Darstellung des Verlaufs der Normalkraft während der Ausfunkzeit, bei welchem der Wert k zu verkleinern ist; und
Fig. 15 eine grafische Darstellung des Verlaufs der Normalkraft während der Ausfunkzeit, bei welchem der Ausfunkzyklus vorzeitig abzubrechen ist.

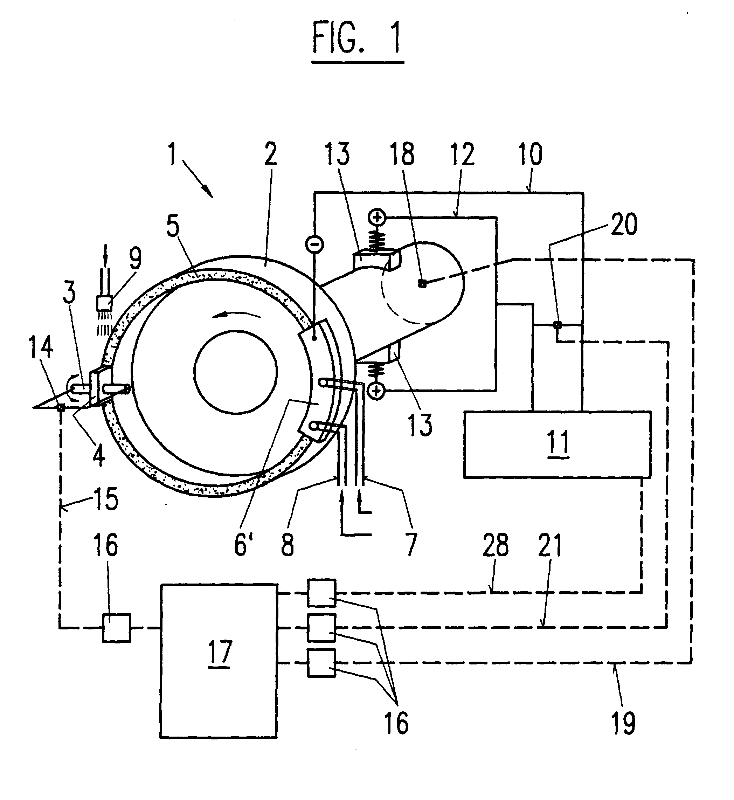

Die Schleifeinrichtung 1 umfasst, wie dies aus Fig. 1 ersichtlich ist, eine Schleifscheibe 2, die in einem nicht dargestellten Maschinenrahmen gelagert ist, und die mittels eines ebenfalls nicht dargestellten Antriebsmotors in bekannter Weise rotierend antreibbar ist. In die Spannmittel 3 ist das Werkstück 4 einspannbar. In der dargestellten Ausführungsform ist das Werkstück 4 eine Wendeschneidplatte, die umfangsgeschliffen werden soll. Hierzu ist die Schleifscheibe 2 als Topfschleifscheibe ausgebildet. Die Spannmittel sind in bekannter Weise so ausgebildet, dass mit der Schleifoberfläche 5 der Schleifscheibe 2 alle für die Wendeschneidplatte erforderlichen Schleifverfahren durchgeführt werden können.

Auf der gegenüberliegenden Seite der Spannmittel 3 ist im Bereich der Schleifscheibe eine Elektrodenhalterung 6' mit einer Elektrode 6 angebracht, die aus Kupfer oder Grafit besteht und die im Kunststoffgehäuse der Elektrodenhalterung 6' eingebettet ist. Dieses Kunststoffgehäuse dient der Isolierung gegenüber der Schleifeinrichtung 1. Das Kunststoffgehäuse ist in bekannter Weise an einer nicht dargestellten Linearachse befestigt, mit deren Hilfe der Abstand der Elektrode 6 zur Oberfläche 5 der Schleifscheibe 2 genau eingestellt werden kann.

In das Kunststoffgehäuse der Elektrode 6 münden Zuführleitungen 7 und 8, durch welche in bekannter Weise aus einem nicht dargestellten Vorratsbehälter das elektrolytische Kühlschmiermittel in den Elektrodenspalt zugeführt werden kann.

Aus dem gleichen Zuführbehälter wird eine Freistrahldüse 9 mit elektrolytischem Kühlschmiermittel beliefert, mit welcher das elektrolytische Kühlschmiermittel in die Schleifkontaktzone zwischen Werkstück 4 und Schleifscheibe 2 einsprühbar ist.

Die Elektrode 6 ist über Leitmittel 10 mit dem negativen Pol mit einer Stromquelle 11 verbunden. Der positive Pol der Stromquelle 11 ist über weitere Leitmittel 12 mit Bürsten 13 verbunden, die in bekannter Weise mit der Achse der Schleifscheibe 2 in Kontakt sind. Der Stromfluss erfolgt somit von der Stromquelle über die weiteren Leitmittel 12 auf die Bürsten 13, die Achse der Schleifscheibe auf die Schleifscheibe 2 selber und gelangt über die Schleifscheibenoberfläche 5 in den Elektrodenspalt.

Die Stromquelle 11 versorgt die Elektrode 6, die als Kathode arbeitet, vorzugsweise mit einem kontinuierlichen ungepulsten Gleichstrom. Es wäre aber auch möglich, mit einem gepulsten Gleichstrom bzw. mit einem Wechselstrom zu arbeiten.

Im Bereich der Werkstückzustellung mit den Spannmitteln 3 ist in bekannter Weise ein erstes Messmittel 14 angebracht, welches als piezoelektrischer Sensor ausgebildet ist, der die Normalkraft N messen kann, mit welcher das Werkstück 4 gegen die Schleifoberfläche 5 der Schleifscheibe 2 gedrückt wird. Das entsprechende Signal wird über die Leitung 15 einer Rechnerund Regeleinrichtung 17 zugeleitet, nachdem im Bauteil 16 in bekannter Weise eine Verstärkung, Filtrierung und Wandlung erfolgt ist.

Über ein zweites Messmittel 18, mittels welchem die aufgenommene Leistung des Antriebsmotors ermittelt wird, wird in der Rechner- und Regeleinrichtung 17, mit welcher dieses zweite Messmittel 18 über die Leitung 19 verbunden ist, die Tangentialkraft T berechnet, welche von der Schleifscheibe 2 auf das Werkstück 4 ausgeübt wird.

Die Stromstärke I wird direkt am Ausgang der Stromquelle 11 abgegriffen und die Spannung U wird über eine Sonde 20 gemessen, wobei diese Werte ebenfalls über Leitungen 21 bzw. 28 der Rechner- und Regeleinrichtung 17 zugeführt wird.

Diese Signale werden ebenfalls und in bekannter Weise in den jeweiligen elektronischen Bauteilen 16 für die Weiterverarbeitung in der Rechner- und Regeleinrichtung 17 angepasst.

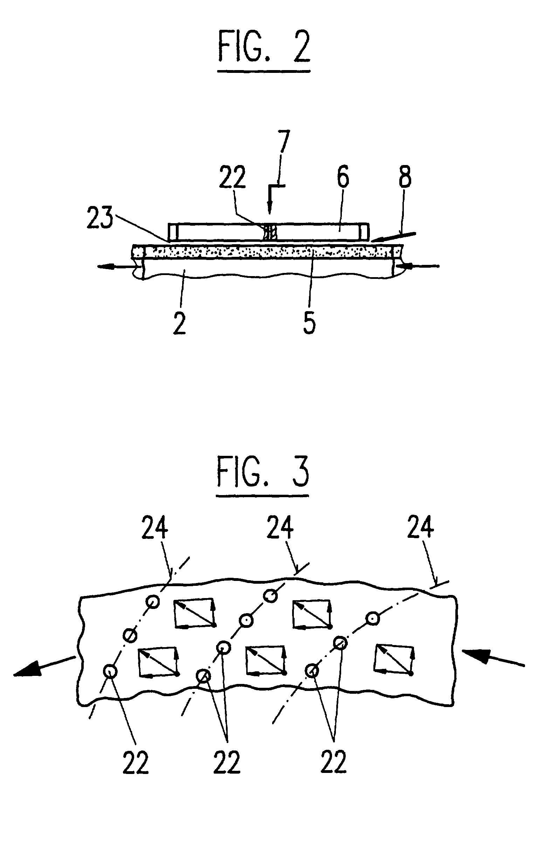

Wie aus Fig. 2 und 3 ersichtlich ist, wird über die Zuführleitung 7 das elektrolytische Kühl- und Schmiermittel über in der Elektrode 6 angeordnete Bohrungen 22 direkt in den Elektrodenspalt 23, der eine Breite von etwa 0,2 bis 0,3 mm hat, geleitet. Die Bohrungen 22 sind auf bogenförmigen Linien 24 und versetzt zueinander angeordnet. Der Druck, mit welchem das elektrolytische Kühlschmiermittel diesen Bohrungen zugeführt wird, beträgt etwa 5 bis 10 bar. Diese Anordnung sowie das die Schleifscheibe 2 überlappende Gehäuse der Elektrode 6 sollen Leckverluste im Elektrodenspalt 23 stark vermindern, die durch die auf die Flüssigkeitsteilchen wirkende Zentrifugalkraft entstehen könnten.

In der Elektrodenhalterung 6' aus Kunststoff für die Elektrode 6 kann auch eine Hochdruckreinigungsdüse integriert sein, die über die Zuführleitung 8 beliefert wird. Diese Düse besitzt eine rechteckige Form, durch die der Hochdruckreinigungsstrahl die gesamte Schleifscheibenbreite beaufschlagen kann. Bei einem Zuführdruck von 40 - 80 bar und einer Anstellung der Düse um 10° gegen die Schleifscheibenlaufrichtung ist eine Reinigung der Schleifscheibenoberfläche von Abtragspartikeln und elektrochemischen Umwandlungsprodukten möglich. Dadurch erhöht sich nicht nur die Abtragsleistung des Schleifprozesses und der Wirkungsgrad des elektrochemischen Prozesses, sondern durch die Reinigung der Spanzwischenräume der Schleifscheibe 2 sinken die Schleifkräfte und die Schleifkontaktzone kann optimal mit den elektrolytischen Kühlschmiermitteln versorgt werden. Die Reinigung der Schleifscheibe kann in Intervallen oder kontinuierlich, vor, nach oder während des Schleifvorgangs durchgeführt werden.

Die Elektrodenbreite umfasst genau die Schleifscheibenbreite und erstreckt sich über 15 bis 20% des Umfangs der Schleifscheibe.

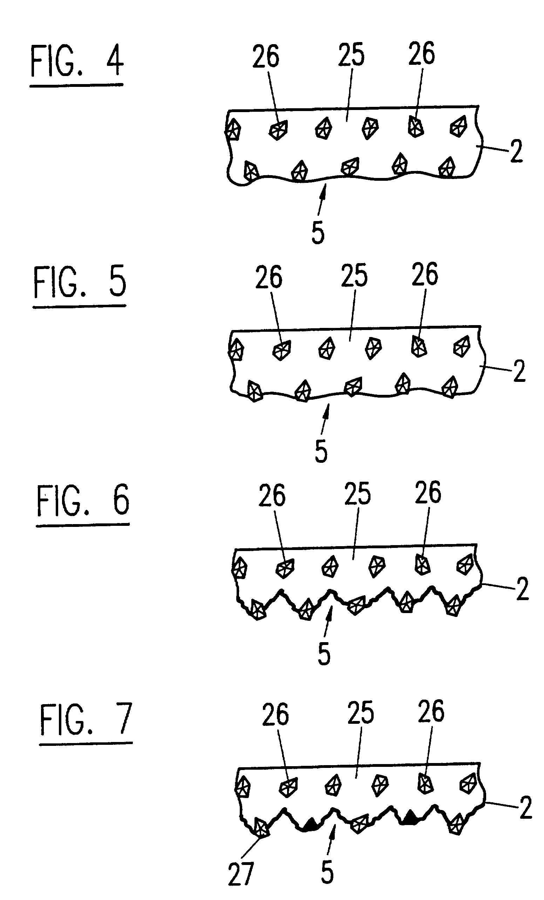

Die Schleifscheibe 2 weist eine Metallbindung 25 auf, wie dies aus den Fig. 4 bis 7 ersichtlich ist, in welche Schleifkörner 26 eingebunden sind. Die Schleifkörner können beispielsweise Diamantkörner oder CBN-Körner sein. Die Metallbindung 25 setzt sich aus einem Binder aus Bronze und einem Füllstoff aus Karboneisen zusammen. Der Binder legt sich hierbei wie ein Lotnetzwerk um die Schleifkörner und den metallischen Füllstoff, und verleiht so dem Schleifscheibenbelag seine notwendige Festigkeit.

Die Schleifscheibe 2 wird in dem Zustand angeliefert, wie dies in Fig. 4 dargestellt ist, d.h., die Schleifkörner 26 weisen praktisch keinen Überstand auf. Die Schleifscheibe 2 wird somit zuerst durch eine Siliziumkarbid-Abrichtscheibe mit Hilfe eines konventionell angetriebenen Abrichtgerätes in die gewünschte Form gebracht, was der Darstellung gemäss der Fig. 5 entspricht. Nach diesem konventionellen Abrichtvorgang wird das elektrochemische Vorschärfen der Schleifscheibe 2 durchgeführt. Dies bedeutet, dass ein Strom I in dem in Fig. 1 dargestellten Stromkreislauf fliesst.

Durch den angelegten Strom erfolgt eine Auflösung der Metallbindung 25 in Ionen bzw. eine Umwandlung der Metallbindung in Hydroxide und Oxide. Die Metallbindung 25 wird zurückgesetzt, so dass nach dem Vorschärfeprozess, der ca. 5 bis 10 Min. dauert und bei welchem die angelegte Stromdichte zwischen 1 und 3 A/cm² liegt, der optimale Ausgangszustand der Schleifscheibenoberfläche mit einem durchschnittlichen Überstand der Körner 26 von 100 bis 120 % des durchschnittlichen Korndurchmessers erreicht ist, wie dies in Fig. 6 dargestellt ist.

An diesen Vorschärfeprozess schliesst der Schleifvorgang mit dem elektrochemischen Schärfen der metallgebundenen Schleifscheibe 2 an. Während des Schleifvorgangs erfolgt durch den angelegten Strom eine weitere Auflösung der Metallbindung 25 in Ionen bzw. eine Umwandlung der Metallbindung in Hydroxide und Oxide. Durch diese elektrochemischen Reaktionen und durch den Abrieb der Oxide und Hydroxide durch den zerspanten Werkstoff wird die Metallbindung 25 weiter zurückgesetzt. Stumpfe Schleifkörner 27 werden von der Bindung freigegeben und neue scharfe Schleifkörner treten an die Schleifoberfläche 5. Für die elektrochemische Behandlung der Schleifscheibe 2 während des Schleifvorgangs liegt die angelegte Stromdichte je nach Bearbeitungsaufgabe zwischen 0,1 und 2 A/cm².

Entsprechend dem Faraday'schen Gesetz, welches besagt, dass die umgesetzte Masse proportional zu der Stromstärke und der Zeit ist, kann die Auflösungsgeschwindigkeit der Metallbindung gesteuert und in weiterer Folge geregelt und an den jeweiligen Schärfezustand der Schleifscheibe angepasst werden, wie später noch beschrieben wird. Um einen höchstmöglichen elektrochemischen Wirkungsgrad und damit auch eine höchstmögliche Auflösungsgeschwindigkeit beim elektrochemischen Prozess zu erreichen, sollte der Stromfluss möglichst so ausgelegt werden, dass ein möglichst kleiner gesamter Ohm'scher Widerstand entsteht. Die möglichen elektrochemischen Reaktionen hängen sehr stark vom anliegenden Potential, dem pH-Wert und der chemischen Zusammensetzung des elektrolytischen Kühlschmiermittels ab und können so auch beeinflusst werden.

Als elektrolytisches Kühlschmiermittel, das in nicht getrennten Kühlschmiermittel- bzw. Elektrolytkreisläufen verwendet wird, muss die entwickelte Flüssigkeit sowohl die Eigenschaften eines Kühlschmiermittels wie auch die Eigenschaften eines Elektrolyten aufweisen. Das elektrolytische Kühlschmiermittel dient daher nicht nur der Kühlung und Schmierung der Schleifkontaktzone, des Werkstücks bzw. der Schleifscheibe, sondern soll die Auflösung der Metallmatrix und der Stromzufuhr ermöglichen, ohne grosse Oxid- und Hydroxidschichtbildung, die Kupferelektrode vor Metallabscheidung schützen, keinen zu hohen pH-Wert aufweisen (Hautverträglichkeit) und Polymerisation an den Elektroden verhindern. Beim im beschriebenen Ausführungsbeispiel verwendeten elektrolytischen Kühlschmiermittel handelt es sich um ein synthetisches, wasserlösliches Konzentrat, welches in einer 5%-Lösung mit deionisiertem Wasser eingesetzt wird. Das elektrolytische Kühlschmiermittel weist einen pH-Wert von 9,6 und eine elektrische Leitfähigkeit von 3,9 mS/cm auf.

Wie vorgängig beschrieben worden ist, können mit der Anordnung, dargestellt in Fig. 1, beim Schleifvorgang die Normalkraft N und die Tangentialkraft T gemessen werden. Aufgrund dieser gemessenen Kräfte kann eine Aussage gemacht werden über den Schärfezustand der Schleifscheibe. Wie später noch beschrieben wird, kann durch die Regelung der elektrochemischen Behandlung der Schleifscheibe diese über einen sehr langen Zeitverlauf, d.h. für eine grosse Anzahl von zu schleifenden Werkstücken, in einem optimalen Schärfezustand gehalten werden.

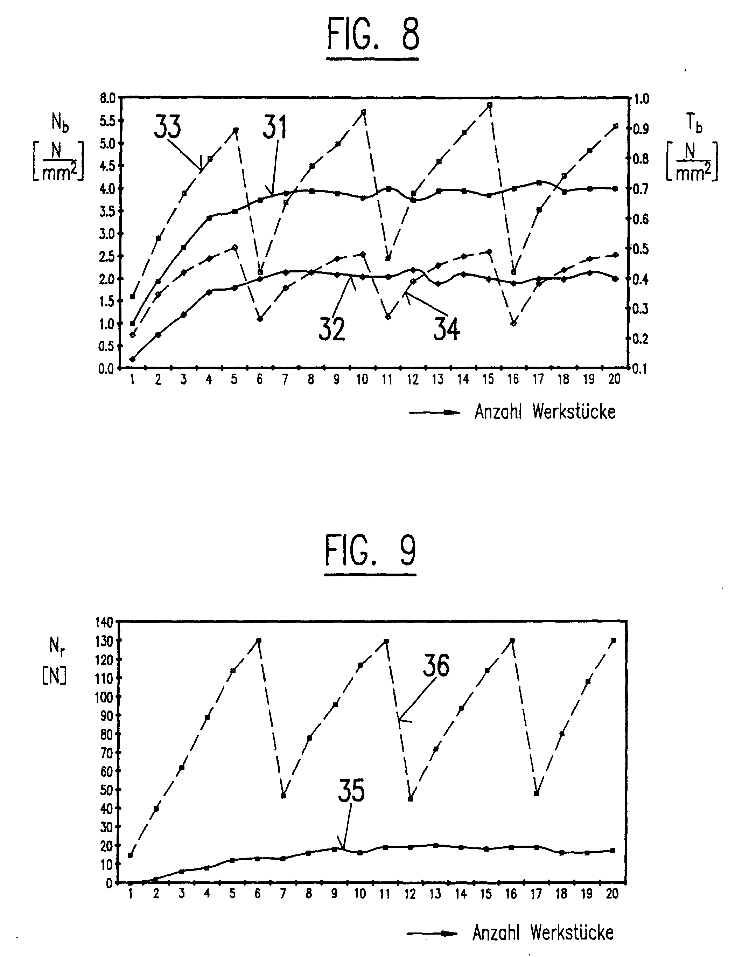

Der Unterschied zwischen dem erfindungsgemässen Verfahren und einem konventionellen Schleifprozess (kunstharzgebundene Schleifscheibe) wird am besten durch den Kräfteverlauf beider Schleifprozessarten verdeutlicht. Im in Fig. 8 dargestellten Diagramm sind die bezogenen Normalkräfte N_{b} und die bezogenen Tangentialkräfte T_{b} dargestellt, die sich jeweils aus der gemessenen Kraft, dividiert durch die jeweilige Grösse der Schleifkontaktzone, ermittelt sind. Es handelt sich demzufolge im Prinzip und Schleifdrücke.

Die Kraftverläufe des erfindungsgemässen Verfahrens sind durch die Kurven 31 und 32 in Fig. 8 dargestellt. Kurve 31 zeigt den Verlauf der bezogenen Normalkraft N_{b}, Kurve 32 den Verlauf der bezogenen Tangentialkraft T_{b}. Die Kurven 33 und 34 beziehen sich auf das konventionelle Schleifverfahren. Die Kurve 33 zeigt den Verlauf der bezogenen Normalkraft N_{b} und die Kurve 34 den Verlauf der bezogenen Tangentialkraft T_{b}. Aus dieser Darstellung ist ersichtlich, dass sich das erfindungsgemässe Verfahren im Vergleich zum konventionellen Schleifprozess durch einen stabilen Verlauf der Prozesskräfte auszeichnet. Nach einem Einschleifprozess von ca. vier Werkstücken, währenddem sich die Schleifscheibentopografie nach dem Profilier- und Vorschärfeprozess an die aktuelle Bearbeitungsaufgabe anpasst, bleiben die bezogenen Prozesskräfte beim erfindungsgemässen Verfahren konstant. Beim konventionellen Schleifprozess sind die bezogenen Kräfte wesentlich höher als beim erfindungsgemässen Verfahren und erreichen bereits nach fünf Werkstücken das Abrichtkriterium. Das bedeutet, dass die Schleifscheibe verstumpft ist, die Schleifkräfte sind für das System Schleifmaschine-Schleifscheibe-Werkstück zu hoch und es muss ein konventioneller Abrichtprozess gestartet werden. Nach diesem Abrichtprozess startet der konventionelle Schleifprozess wieder mit sehr kleinen Prozesskräften. Dieser sägezahnförmige Kräfteverlauf, dargestellt in den Kurven 33 und 34, ist typisch für den konventionellen Schleifprozess.

Für die Qualität des geschliffenen Werkstücks hinsichtlich Form- und Masshaltigkeit ist insbesondere die auftretende Restnormalkraft Nᵣ ausschlaggebend. Die Restnormalkraft Nᵣ ist jene Kraft, welche am Ende des Ausfunkzyklus, d.h. nach dem Abbau des Schleifdruckes durch das Überschleifen des Werkstücks ohne Zustellung des Werkstücks zum Werkzeug während der vorgegebenen Ausfunkzeit t₂ noch übrig bleibt. Diese Kraft kann vor allem bei den harten modernen Schneidwerkstoffen sehr gross werden. Durch elastische Deformationen und Nachgiebigkeiten des Systems Schleifmaschine-Werkstück-Schleifscheibe führt diese Restkraft zu erheblichen Form- und Massungenauigkeiten an einem Werkstück, insbesondere Wendeschneidplatte. Bei den konventionellen Schleifprozessen kommen noch die Schwankungen der Form- und Massgenauigkeiten über die Zeit durch den zeitlich wechselnden Schärfezustand der Schleifscheibe hinzu. Die Restnormalkraft Nᵣ wird, wie später noch beschrieben wird, in diesem Sinne überwacht und wird zur Regelung der elektrochemischen Behandlung der Schleifscheibe mitbenützt. Es hat sich herausgestellt, dass in der Praxis eine Festlegung der Restnormalkraft Nᵣ auf 70 bis 80 N sinnvoll ist.

Der Verlauf der Restnormalkraft ist im Diagramm, dargestellt in Fig. 9, aufgezeigt. Die Kurve 35 zeigt den Verlauf der Restnormalkraft des erfindungsgemässen Verfahrens, während die Kurve 36 den Kraftverlauf eines konventionellen Schleifvorgangs darstellt, wobei wiederum der sägezahnförmige Kräfteverlauf, der typisch für den konventionellen Schleifprozess ist, auftritt.

Schleifprozesse werden durch das Verhältnis von abgetragenem Werkstückvolumen zum verbrauchten Schleifscheibenvolumen charakterisiert. Dieses Verhältnis wird G-Wert genannt. Bei konventionellen Schleifprozessen soll der G-Wert möglichst gross sein, die Schleifscheibe soll aber dennoch im Selbstschärfebereich arbeiten. Beim erfindungsgemässen Verfahren wird der G-Wert durch den elektrochemischen Schärfeprozess vorgegeben und kann auch während des Prozesses verändert werden. Während bei konventionellen Prozessen der G-Wert durch Veränderung der Härte der Schleifscheibe, d.h. Verwendung einer neuen Schleifscheibe, an die aktuelle Bearbeitungsaufgabe angepasst wird, wird die Härte der Schleifscheibe beim erfindungsgemässen Verfahren durch Veränderung der Auflösungsgeschwindigkeit realisiert. Grundsätzlich besitzt die metallisch gebundene Schleifscheibe ein äusserst hartes Bindungssystem, d.h. durch den Schleifprozess selbst stellt sich kein abrasiver Verschleiss an der Schleifscheibenbindung ein, die Scheibe zeigt absolut kein Selbstschärfeverhalten. Die Härte der metallischen Bindung wird also durch die Geschwindigkeit ihrer elektrochemischen Auflösung vorgegeben und an die jeweilige Bearbeitungsaufgabe angepasst.

Die Vorgabe der Auflösungsgeschwindigkeit an die aktuelle Bearbeitungsaufgabe erfolgt nach Erfahrungswerten. Die Anpassung der Auflösungsgeschwindigkeit an den aktuellen Schärfezustand der Schleifscheibe in Abhängigkeit der Bearbeitungsaufgabe erfolgt beim erfindungsgemässen Verfahren durch die Regelung der elektrochemischen Behandlung.

Für diese Regelung ist eine während des Schleifvorgangs messbare Grösse notwendig, welche den Schärfezustand der Schleifscheibe beschreibt, und welche weitgehendst unabhängig von der Geometrie des Werkstückes bzw. der Grösse der Schleifkontaktfläche der aktuellen Bearbeitungsaufgabe ist. Diese Kenngrösse ist der Wert k, welcher durch das Verhältnis der Normalkraft N zur Tangentialkraft T gebildet wird.

Die Normalkraft N und die Tangentialkraft T werden, wie bereits erwähnt, gemessen.

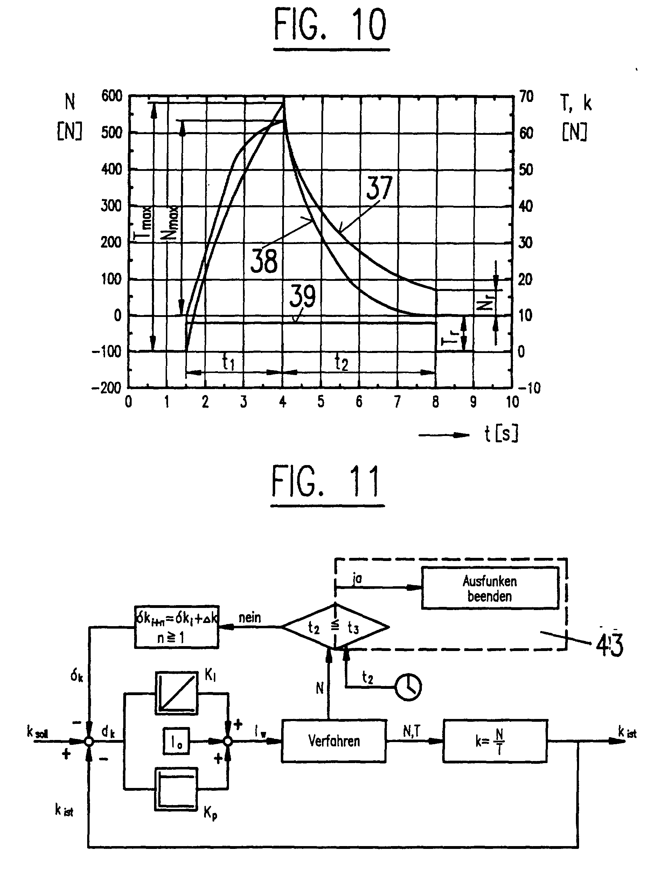

In Fig. 10 ist im Diagramm schematisch der Verlauf der Normalkraft N (Kurve 37), der Verlauf der Tangentialkraft T (Kurve 38) und der Wert k (Kurve 39) in Abhängigkeit der Zeit für einen Schleifzyklus dargestellt. Der Zeitbereich t₁ stellt die Schnittzeit dar, während der Zeitbereich t₂ die Ausfunkzeit darstellt.

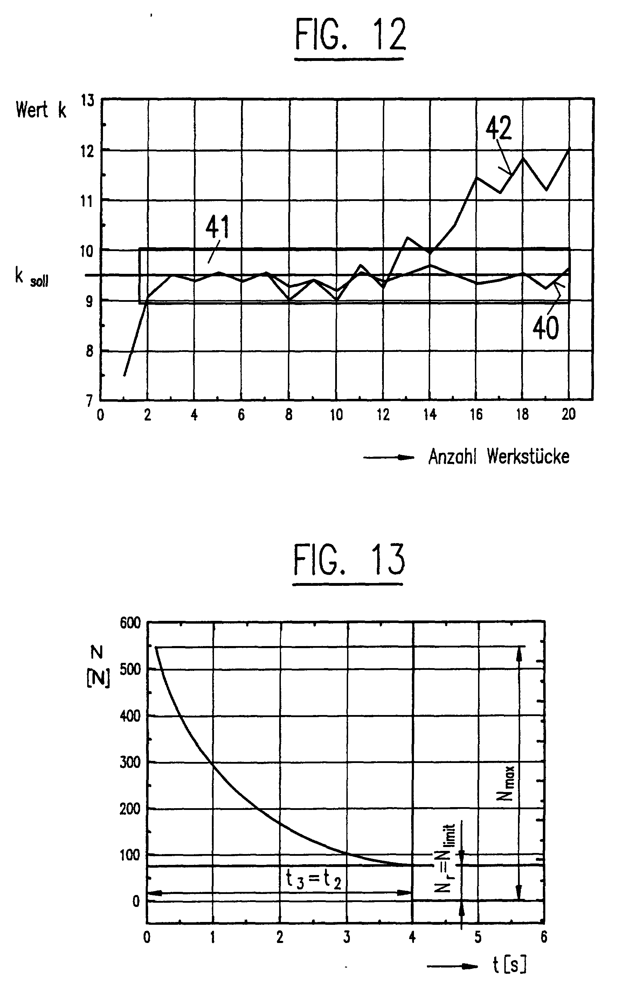

Für die Regelung, wie sie in Fig. 11 dargestellt ist, werden die beiden Kenngrössen Normalkraft N und Tangentialkraft T im Bereich der Schnittzeit t₁, ersichtlich aus Fig. 10, integrierend innerhalb eines kurzen Zeitfensters gemessen. Aus diesen beiden Messwerten ergibt sich dann der Wert k. Die maximalen Normal- und Tangentialkräfte, wie sie in Fig. 10 eingezeichnet sind, sind für die Regelung des erfindungsgemässen Verfahrens nicht entscheidend.

Der Wert kₛₒₗₗ stellt also die Eingangsgrösse für die Prozessregelung dar. Als Regler kommt ein PI-Regler zum Einsatz, der die Stellgrösse I_{w}, welches die Arbeitsstromstärke der elektrochemischen Behandlung der Schleifscheibe ist, regelt. Neben der Anpassung des Werts kₛₒₗₗ bzw. dessen Korrektur, wird dieser Regelkreis auch zur Minimierung der Ausfunkzeit t₂ verwendet. Diese Ausfunkzeitminimierung arbeitet im Prinzip auf der Überwachung der Normalkraft N während des Ausfunkens. Durch diese Ausfunkzeitminimierung können die Bearbeitungszeiten zum Schleifen eines Werkstücks erheblich gesenkt werden. Gleichzeitig kann die Prozesssicherheit und die Werkstückqualität durch konstante Restnormalkräfte deutlich erhöht werden. Auch für die Standzeit des einzelnen Schleifkorns bringt diese Regelung deutliche Vorteile. Das einzelne Schleifkorn kann viel länger scharfgehalten werden, da es nicht mehr mit sehr hoher Geschwindigkeit über die Werkstückoberfläche gleitet und Wärme produziert, ohne dass es am Zerspanungsprozess teilnimmt bzw. im Rahmen des Werksrückabtrags in die Werkstückoberfläche eintaucht.

Durch diese Regelung des Verfahren kann der Schärfezustand der Schleifscheibe nach dem Einschleifvorgang immer in einem konstanten Bereich gehalten werden. Dies ist in Fig. 12 dargestellt. Der Wert k, dargestellt durch die Kurve 40, soll nicht stark vom Wert kₛₒₗₗ abweichen, sondern sich innerhalb eines Zielfensters 41 bewegen. Wenn der Prozess ungeregelt abläuft, steigt der Wert k nach dem Einschleifvorgang und einer kurzen Phase konstanter Schleifbedingungen stark an, wie dies durch die Kurve 42 dargesstellt ist.

Die Regelung, wie sie in Fig. 11 dargestellt ist, umfasst ein Ausfunkzeitminimierungsmodul 43. Der Ja-Zweig der Entscheidungsraute des Regelschaltbildes t₂ ≤ t₃ führt zur Beendigung des Ausfunkvorgangs. Der Nein-Zweig dieser Raute dient der Korrektur des Wertes kₛₒₗₗ, falls der restliche Regelkreis den Wert k im vorgegebenen Zielfenster 41 (Fig. 12) halten kann, die Restnormalkräfte jedoch immer grösser werden. Dies bedeutet, dass die geschliffenen Flächen aufgrund einer verstumpften Schleifscheibe nicht mehr ausgeschliffen werden können. Zu diesem Zweck erfolgt keine absolute Angabe der Ausfunkzeit t₂, sondern es wird ein Ausfunkzeitlimit t₃ gesetzt, innerhalb dessen das Ausfunken der Fläche unterhalb des gesetzten Limits der Restnormalkraft Nᵣ durchgeführt werden muss. Das Limit der Restnormalkraft Nᵣ liegt für das System Schleifmaschine-Schleifscheibe-Werkstück mit ihrer Werkstückspanneinrichtung des hier dargestellten Ausführungsbeispiels, sowie der Form- und Massgenauigkeitsanforderungen an die geschliffenen Werkstücke, bei ca. 60 bis 80 Newton.

Wirtschaftliche Ausfunkzeiten sollten auf jeden Fall unter 5 Sekunden liegen.

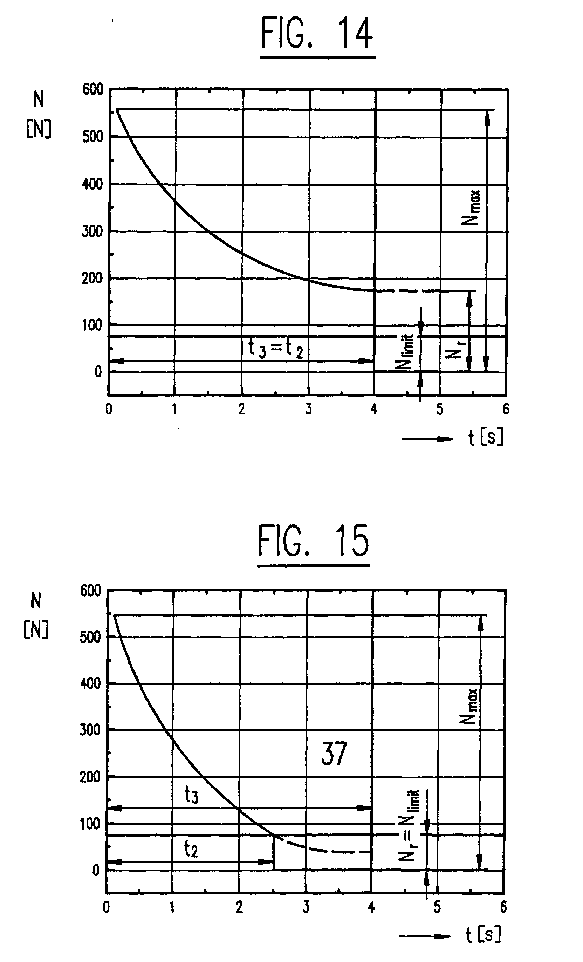

In der Darstellung gemäss Fig. 13 wurde das Limit für die Restnormalkraft Nᵣ mit 80 Newton und das Limit für die Ausfunkzeit t₃ mit 4 Sekunden festgelegt. Der hier dargestellte Ausfunkzyklus geht genau durch den Schnittpunkt der beiden Limiten. Dies ist ein Sonderfall. In der Regel kann zwischen den folgenden zwei Fällen unterschieden werden, die in den Fig. 14 und 15 dargestellt sind.

Gemäss Fig. 14 liegt nach Ablauf des gesetzten Limits der Ausfunkzeit t₃ die Restnormalkraft Nᵣ deutlich über dem gewünschten Restnormalkraftlimit. Eine Verlängerung der Ausfunkzeit um eine Sekunde würde keinen weiteren Abbau der Restnormalkraft Nᵣ bewirken und die Wirtschaftlichkeit des Schleifprozesses negativ beeinflussen. Gleichzeitig wäre eine Verlängerung der Ausfunkzeit t₃ auch sehr ungünstig für den aktuellen Schärfezustand der Schleifscheibe, da die Schleifkörner mit sehr hoher Geschwindigkeit über die Werkstückoberfläche geführt werden, ohne dass ein weiterer Materialabtrag bzw. Abbau des Schleifdruckes stattfindet. Stattdessen würden die Schleifkörner sehr viel Reibung und damit auch Reibungswärme erzeugen, wodurch eine thermische Schädigung der Schleifkörner eintreten könnte. Die Nichterreichung des Restnormalkraftlimits innerhalb des Ausfunkzeitlimits t₃ bedeutet, dass der festgesetzte Wert kₛₒₗₗ des angewandten Verfahrens zu hoch ist und nach unten korrigiert werden muss.

Dies erfolgt über den Nein-Zweig der Raute t₂ ≤ t₃ des Regelschaltbildes gemäss Fig. 11.

Der zweite Fall ist in Fig. 15 dargestellt. Daraus ist entnehmbar, dass die Normalkraft N bereits vor Ablauf des gesetzten Limits der Ausfunkzeit t₃ das gesetzte Limit der Restnormalkraft unterschreitet. Entsprechend der Ausfunkzeitminimierung wird der Ausfunkzyklus beim Erreichen des Restnormalkraftlimits, wie dies bereits erwähnt worden ist, beendet. Ein weiteres Ausfunken der Fläche bis zum gesetzten Ausfunkzeitlimit t₃ würde zwar noch eine geringfügige Senkung der Restnormalkraft Nᵣ bedeuten, gleichzeitig steigt aber die Bearbeitungszeit und somit würde die Wirtschaftlichkeit des Bearbeitungsprozesses sinken.

Neben rein zeitlichen bzw. wirtschaftlichen Gesichtspunkten gibt es aber noch einen technologischen Vorteil dieses Ausfunkzeitminimierungsmoduls. Unabhängig vom Schärfezustand der Schleifscheibe und Grösse der Kontaktfläche der bearbeiteten Werkstückfläche erfolgt das Ausfunken der Flächen immer bis zum festgelegten Limit der Restnormalkraft Nᵣ. Das bedeutet, dass die Summe aller Nachgiebigkeiten bzw. elastischer Deformationen im System Schleifmaschine-Schleifscheibe-Werkstück immer gleich gross sind, wodurch die Prozesssicherheit bezüglich Massgenauigkeit des geschliffenen Werkstückes deutlich steigt.

Die elektrochemische Behandlung der Schleifscheibe während des Schleifvorgangs kann kontinuierlich oder in Intervallen erfolgen. Die elektrochemische Behandlung der Schleifscheibe kann vor und/oder während und/oder nach dem Schleifvorgang durchgeführt werden.

Selbstverständlich wäre es auch denkbar, für die Regelung des elektrochemischen Behandlungsvorgangs der Schleifscheibe jeweils die Tangentialkräfte zu verwenden, deren Messung einfacher ist als die Messung der Normalkräfte. Es hat sich aber gezeigt, dass die Qualität des Messsignals und die damit verbundene Genauigkeit und Sicherheit von Entscheidungen des Regelkreises bei den gemessenen Normalkräften wesentlich höher ist.

Wie bereits erwähnt worden ist, ist dieses erfindungsgemässe Verfahren und die Vorrichtung zur Durchführung des Verfahrens nicht auf das Schleifen von Wendeschneidplatten beschränkt. Vielmehr kann damit jede Art von Werkstücken bearbeitet werden, die insbesondere aus einem harten Werkstoff bestehen. Diese können auch eine geringe Wärmeleitfähigkeit haben, da die Ableitung der entstehenden Wärme wie bereits erwähnt optimal gewährleistet ist.

## Patentansprüche

1. Verfahren zum Schleifen von Oberflächen von Werkstücken (4) mit einer metallisch gebundenen Schleifscheibe (2), welche durch eine elektrochemische Behandlung, die mittels einer Elektrode (6), die von der Schleifscheibe (2) beabstandet angeordnet ist, so dass zwischen Elektrode (6) und Schleifscheibe (2) ein Spalt (8) gebildet wird, einem in den Spalt (8) eingegebenen elektrolytischen Kühlschmiermittel und einer Stromquelle (11), mittels welcher ein durch die Elektrode (6), das elektrolytische Kühlschmiermittel und die Schleifscheibe (2) geleiteter Strom (I) erzeugt wird, geschärft wird, **dadurch gekennzeichnet, dass** während des Schleifvorgangs mindestens eine durch die Schleifscheibe (2) auf das zu schleifende Werkstück (4) wirkende Grösse einer Kraft (N; T) gemessen wird, dass aufgrund dieser mindestens einen gemessenen Grösse der Kraft (N; T) die elektrochemische Behandlung der Schleifscheibe (2) durch Verändern der Stärke des genannten Stroms (I) mittels einer Rechner- und Regeleinrichtung (17) geregelt wird.

2. Verfahren nach Anspruch 1, **dadurch gekennzeichnet, dass** die Schleifscheibe (2) vor dem ersten Schleifeinsatz einer elektrochemischen Vorbehandlung unterzogen wird.

3. Verfahren nach Anspruch 1 oder 2, **dadurch gekennzeichnet, dass** während des Schleifvorgangs die Grösse der durch die Schleifscheibe (2) auf das zu schleifende Werkstück (4) bezüglich der Schleifscheibenoberfläche wirkende Normalkraft (N) gemessen wird.

4. Verfahren nach Anspruch 1 oder 2, **dadurch gekennzeichnet, dass** während des Schleifvorgangs die Grösse der durch die Schleifscheibe (2) auf das zu schleifende Werkstück (4) bezüglich der Schleifscheibenoberfläche wirkende Tangentialkraft (T) gemessen wird.

5. Verfahren nach Anspruch 3 und 4, **dadurch gekennzeichnet, dass** in der Rechner- und Regeleinrichtung (17) die gemessene Normalkraft (N) durch die gemessene Tangentialkraft (T) dividiert und ein Wert (kᵢₛₜ) erhalten wird, welcher mit einem Sollwert (kₛₒₗₗ) verglichen wird und zur Regelung der Stromstärke (I) verwendet wird.

6. Verfahren nach Anspruch 5, **dadurch gekennzeichnet, dass** ein Schleifvorgang zur Bearbeitung eines Werkstücks (4) in Schleifzyklen unterteilt ist, während welchen jeweils mindestens ein Teil einer Oberfläche eines Werkstücks (4) geschliffen wird, und dass ein Schleifzyklus aus einer Schnittperiode, welche während der Schnittzeit (t₁) durchgeführt wird, und aus einer Ausfunkperiode, welche während der Ausfunkzeit (t₂) durchgeführt wird, zusammengesetzt ist, und dass die Restnormalkraft (Nᵣ) während der Ausfunkzeit (t₂) gemessen und mit einer vorgegebenen Restnormalkraft verglichen wird.

7. Verfahren nach Anspruch 6, **dadurch gekennzeichnet, dass** die maximale Ausfunkzeit (t₃) vorgegeben wird, dass der Sollwert (kₛₒₗₗ) erniedrigt wird, wenn nach Ablauf der vorgegebenen Ausfunkzeit (t₃) die gemessene Restnormalkraft (Nᵣ) höher ist als die vorgegebene Restnormalkraft.

8. Verfahren nach Anspruch 6, **dadurch gekennzeichnet, dass** der Ausfunkzyklus abgebrochen wird, wenn während der vorgegebenen Ausfunkzeit (t₃) die gemessene Restnormalkraft (Nᵣ) kleiner ist als die vorgegebene Restnormalkraft.

9. Vorrichtung zur Durchführung des Verfahrens nach einem der Anspräche 1 bis 8, umfassend eine Schleifeinrichtung (1), in welcher eine Schleifscheibe (2) gelagert ist, die mittels eines Antriebsmotors rotierend antreibar ist, Spannmittel (3) zur Halterung eines zu schleifenden Werkstücks (4), eine Elektrodenhalterung (6') mit eingesetzter Elektrode (6), Zuführmittel (7, 8, 9) für die Zuführung des elektrolytischen Kühlschmiermittels, ein Stromerzeugungsmittel (11) zur Erzeugung eines Stroms (I), welcher über Leitmittel (10, 12) durch die Elektrode (6) und die Schleifscheibe (2) geleitet wird, **dadurch gekennzeichnet, daß** sie Messmittel (14, 18) zum Messen der während des Schleifvorgangs zwischen Schleifscheibe (2) und Werkstück (4) wirkenden Normalkraft (N) und Tangentialkraft (T) und eine Rechner- und Regeleinrichtung (17) zur Erfassung der gemessenen Grössen und zur Regelung des elektrochemischen Schärfvorgangs der Schleifscheibe (2) und des Schleifvorgangs umfasst.

10. Vorrichtung nach Anspruch 9, **dadurch gekennzeichnet, dass** die Schleifscheibe (2) eine Metallbindung (25) aufweist, in welcher die Schleifkörner (26, 27) gebunden sind, und dass die Metallbindung (25) aus einem Binder aus Bronze und einem Füllstoff aus Carboneisen zusammengesetzt ist.

11. Vorrichtung nach Anspruch 9 oder 10, **dadurch gekennzeichnet, dass** das Messmittel (14) zur Messung der Normalkraft (N) einen piezoelektrischen Sensor umfasst, der über eine Leitung (15) mit der Rechner- und Regeleinrichtung (17) verbunden ist.

12. Vorrichtung nach einem der Ansprüche 9 bis 11, **dadurch gekennzeichnet, dass** das Messmittel (18) zur Messung der Tangentialkraft (T) die Leistung des Antriebsmotors der Schleifscheibe (2) ermittelt und daraus durch die Rechner- und Regeleinrichtung (17), mit welcher das Messmittel (18) über eine Leitung (19) verbunden ist, die Tangentialkraft (T) berechenbar ist.

13. Vorrichtung nach einem der Ansprüche 9 bis 12, **dadurch gekennzeichnet, dass** die Zuführmittel für die Zuführung des elektrolytischen Kühlschmiermittels eine Freistrahldüse (9), mit welcher das Kühlschmiermittel in die Schleifkontaktzone zwischen Werkstück (4) und Schleifscheibe (2) einsprühbar ist, und eine Zuleitung (7) zur Elektrode (6) umfasst, welche mit Bohrungen (22), die mit der Zuleitung (7) verbunden sind, versehen ist, die gegen die Schleifscheibe (2) gerichtet sind.

14. Vorrichtung nach Anspruch 13, **dadurch gekennzeichnet, dass** die Bohrungen (22) auf der der Schleifscheibe (2) zugewandten Oberfläche der Elektrode (6) auf benachbarten bogenförmigen Linien (24) und versetzt zueinander angeordnet sind.

15. Vorrichtung nach Anspruch 13 oder 14, **dadurch gekennzeichnet, dass** ferner eine Hochdruckreinigungsdüse (8) vorgesehen ist, welche in die Elektrodenhalterung (6') integriert ist, und durch welche das elektrolytische Kühlschmiermittel auf die Schleifscheibe (2) aufstrahlbar ist.

16. Vorrichtung nach einem der Ansprüche 9 bis 15, **dadurch gekennzeichnet, dass** das Stromerzeugungsmittel (11) einen ungepulsten Gleichstrom (I) liefert.

17. Vorrichtung nach einem der Ansprüche 9 bis 16, **dadurch gekennzeichnet, dass** das elektrolytische Kühlschmiermittel ein synthetisches wasserlösliches Konzentrat ist, eingesetzt in einer etwa 5%-Lösung mit deionisiertem Wasser, und dass dieses einen pH-Wert, der etwa zwischen 9 und 10 liegt, und eine elektrische Leitfähigkeit von etwa 4 mS/cm aufweist.

## Claims

1. Method for grinding surfaces of workpieces (4) with a metal bonded grinding wheel (2), which is sharpened through an electrochemical conditioning generated by means of an electrode (6), which is disposed spaced apart from the grinding wheel (2) so that a gap (8) is formed between electrode (6) and grinding wheel (2), an electrolytic cooling lubricant, introduced into the gap (8), and a source of current (11), by means of which a current (I) is produced, conducted through the electrode (6), through the electrolytic cooling lubricant and through the grinding wheel (2), **characterised in that** during the grinding operation at least one value is measured of a force (N; T) exerted by the grinding wheel (2) on the workpiece (4) to be ground, **in that** on the basis of this at least one measured value of the force (N; T), the electrochemical conditioning of the grinding wheel (2) is controlled by changing the intensity of said current (I) by means of a computing and control device (17).

2. Method according to claim 1, **characterised in that**, before first use of the grinding wheel, the grinding wheel (2) is subjected to an electrochemical pre-conditioning.

3. Method according to claim 1 or 2, **characterised in that** measured during the grinding operation is the magnitude of the normal force (N) exerted by the grinding wheel (2) on the workpiece (4) to be ground, with respect to the grinding wheel surface.

4. Method according to claim 1 or 2, **characterised in that** measured during the grinding operation is the magnitude of the tangential force (T) exerted by the grinding wheel (2) on the workpiece (4) to be ground, with respect to the grinding wheel surface.

5. Method according to claim 3 or 4, **characterised in that** in the computing and control device (17) the measured normal force (N) is divided by the measured tangential force (T), and a value (kᵢₛₜ) is obtained, which is compared with a set value (kₛₒₗₗ), and is used for control of the current intensity (I).

6. Method according to claim 5, **characterised in that** a grinding operation for machining a workpiece (4) is subdivided into grinding cycles, during each of which at least one part of a surface of a workpiece (4) is ground, and **in that** a grinding cycle comprises a cutting period carried out during the cutting time (t₁) and a spark-out period carried out during the spark-out time (t₂), and **in that** the residual normal force (Nᵣ) during the spark-out time (t₂) is measured and is compared with a pre-given residual normal force.

7. Method according to claim 6, **characterised in that** the maximal spark-out time (t₃) is pre-given, <and> **in that** the set value (kₛₒₗₗ) is lowered when the measured residual normal force (Nᵣ) after expiration of the pre-given spark-out (t₃) time is higher than the pre-given residual normal force.

8. Method according to claim 6, **characterised in that** the spark-out cycle is interrupted when, during the pre-given spark-out time (t₃), the measured residual normal force (Nᵣ) is smaller than the pre-given residual normal force.

9. An apparatus for carrying out the method according to one of the claims 1 to 8, comprising a grinding device (1), in which a grinding wheel (2) is disposed, which is rotatingly drivable by means of a driving motor, chucking means (3) for holding a workpiece (4) to be ground, an electrode mounting (6') with inserted electrode (6), feed means (7, 8, 9) for supply of the electrolytic cooling lubricant, current generating means (11) for producing a current (I) which is conducted through the electrode (6) and the grinding wheel (2) via conducting means (10, 12), **characterised in that** measuring means (14, 18) to measure, during the grinding operation, the normal force (N) and tangential force (T), acting between the grinding wheel (2) and the workpiece (4), and a computing and control device (17) for collecting the measured values and for controlling the process of electrochemical sharpening of the grinding wheel (2) and the grinding operation.

10. Apparatus according to claim 9, **characterised in that** the grinding wheel (2) has a metal bonding (25), in which the grinding grains (26, 27) are bound, and **in that** the metal bonding (25) is composed of a bronze bonding substance and a carbon-iron filler material.

11. Apparatus according to claim 9 or 10, **characterised in that** the measuring means (14) for measuring the normal force (N) comprises a piezoelectric sensor, which is connected through a line (15) to the computing and control device (17).

12. Apparatus according to one of the claims 9 to 11, **characterised in that** the measuring means (18) for measuring the tangential force (T) determines the output of the driving motor of the grinding wheel (2), and the tangential force (T) is able to be calculated therefrom by the computing and control device (17) to which the measuring means (18) is connected via a line (19).

13. Apparatus according to one of the claims 9 to 12, **characterised in that** the feed means for supply of the electrolytic cooling lubricant is a free jet nozzle (9), with which the cooling lubricant is able to be sprayed into the grinding contact zone between the workpiece (4) and the grinding wheel (2), and includes a supply line (7) to the electrode (6), provided with bores (22) connected to the supply line (7), which bores are directed toward the grinding wheel (2).

14. Apparatus according to claim 13, **characterised in that** the bores (22) on the surface of the electrode (6) turned toward the grinding wheel (2) are disposed on adjacent, arc-shaped lines (24) and are offset with respect to one another.

15. Apparatus according to claim 13 or 14, **characterised in that** provided additionally is a high-pressure cleaning jet (8), which is integrated into the electrode mounting (6'), and through which the electrolytic cooling lubricant is able to be sprayed on the grinding wheel (2).

16. Apparatus according to one of the claims 9 to 15, **characterised in that** the current generating means (11) supplies a non-pulsed direct current (I).

17. Apparatus according to one of the claims 9 to 16, **characterised in that** the electrolytic cooling lubricant is a synthetic, water-soluble concentrate, in an approximately 5% solution with deionised water, and has a pH between about 9 and 10 and an electrical conductivity of about 4 mS/cm.

## Revendications

1. Procédé de rectification de la surface de pièces (4) avec une meule (2) à liant métallique qui est affûtée par un traitement électrochimique effectué au moyen d'une électrode (6) placée à une certaine distance de la meule (2), de telle sorte qu'un interstice (8) se forme entre l'électrode (6) et la meule (2), d'un liquide électrolytique de refroidissement et de lubrification amené dans l'interstice (8) et d'une source de courant électrique (11) au moyen de laquelle est produit un courant (I) que l'on fait passer dans l'électrode (6), le liquide électrolytique de refroidissement et de lubrification et la meule (2), **caractérisé en ce que**, pendant la rectification, au moins une grandeur d'une force (N ; T) agissant sur la pièce (4) par l'intermédiaire de la meule (2) est mesurée, et **en ce que** le traitement électrochimique de la meule (2) est régulé par modification de l'intensité du courant (I) mentionné au moyen d'un dispositif de calcul et de régulation (17), sur la base de cette grandeur, au moins, de la force (N ; T) qui est mesurée.

2. Procédé selon la première revendication, **caractérisé en ce que** la meule (2) subit un traitement électrochimique préliminaire avant sa première utilisation en rectification.

3. Procédé selon la revendication 1 ou 2, **caractérisé en ce que**, pendant la rectification, l'intensité de la force normale (N) appliquée à la pièce à rectifier (4) par la meule (2) par rapport à la surface de la meule est mesurée.

4. Procédé selon la revendication 1 ou 2, **caractérisé en ce que**, pendant la rectification, l'intensité de la force tangentielle (T) appliquée à la pièce à rectifier (4) par la meule (2) par rapport à la surface de la meule est mesurée.

5. Procédé selon la revendication 3 ou 4, **caractérisé en ce que**, dans le dispositif de calcul et de régulation (17), la force normale (N) mesurée est divisée par la force tangentielle (T) mesurée, ce qui donne une valeur (kᵢₛₜ) qui est comparée à une valeur de consigne (kₛₒₗₗ) et utilisée pour réguler l'intensité (I) du courant.

6. Procédé selon la revendication 5, **caractérisé en ce qu'**une opération de rectification destinée à usiner une pièce (4) est divisée en cycles de rectification pendant chacun desquels au moins une patie d'une surface d'une pièce (4) est rectifiée, **en ce qu'**un cycle de rectification est constitué par une période de coupe pendant le temps de coupe (t₁) et par une période de passes à lécher pendant le temps de passes à lécher (t₂), et **en ce que** la force normale résiduelle (Nᵣ) est mesurée pendant le temps de passes à lécher (t₂) et comparée à une force normale résiduelle fixée d'avance.

7. Procédé selon selon la revendication 6, **caractérisé en ce que** le temps maximal de passes à lécher (t₃) est fixé d'avance et **en ce que** la valeur de consigne (kₛₒₗₗ) est abaissée si, après l'écoulement du temps de passes à lécher (t₃) fixé d'avance, la force normale résiduelle (Nᵣ) mesurée est supérieure à la force normale résiduelle fixée d'avance.

8. Procédé selon la revendication 6, **caractérisé en ce que** le cycle de passes à lécher est interrompu si, pendant le temps de passes à lécher (t₃) fixé d'avance, la force normale résiduelle (Nᵣ) mesurée est inférieure à la force normale résiduelle fixée d'avance.

9. Dispositif d'exécution du procédé selon l'une des revendications 1 à 8, comprenant un système de rectification (1) dans lequel est montée une meule (2) pouvant être entraînée au moyen d'un moteur d'entraînement, des moyens de serrage (3) servant à maintenir la pièce (4) à rectifier, un porte-électrode (6') avec électrode (6) en place, des moyens d'amenée (7, 8, 9) servant à amener le liquide électrolytique de refroidissement et de lubrification, un moyen de production de courant électrique (11), servant à produire un courant (I) qui est amené, par des conducteurs (10, 12), dans l'électrode (6) et dans la meule (2), **caractérisé en ce qu'**il comprend des moyens de mesure (14, 18) servant à mesurer la force normale (N) et la force tangentielle (T) qui agissent entre la meule (2) et la pièce (4) pendant l'opération de rectification ainsi qu'un dispositif de calcul et de régulation (17) destiné à saisir les grandeurs mesurées et à réguler l'opération électrochimique d'affûtage de la meule (2) et la rectification.

10. Dispositif selon la revendication 9, **caractérisé en ce que** la meule (2) présente un liant métallique (25) dans lequel sont maintenus les grains abrasifs (26, 27), et **en ce que** le liant métallique (25) se compose d'un agglomérant en bronze et d'une charge de fer carbonyle.

11. Dispositif selon la revendication 9 ou 10, **caractérisé en ce que** le moyen de mesure (14) servant à mesurer la force normale (N) comprend un capteur piézoélectrique qui est relié par un câble (15) au dispositif de calcul et de régulation (17).

12. Dispositif selon l'une des revendications 9 à 11, **caractérisé en ce que** le moyen de mesure (18) servant à mesurer la force tangentielle (T) détermine la puissance du moteur d'entraînement de la la meule (2) et que le dispositif de calcul et de régulation (17), auquel le moyen de mesure (18) est relié par un câble (19), peut l'utiliser pour calculer la force tangentielle (T).

13. Dispositif selon l'une des revendications 9 à 12, **caractérisé en ce que** les moyens d'amenée servant à amener le liquide électrolytique de refroidissement et de lubrification comprennent une buse à jet libre (9) permettant de pulvériser le liquide de refroidissement et de lubrification dans la zone de contact de meulage entre la pièce (4) et la meule (2) ainsi qu'une conduite d'amenée (7) à l'électrode (6), qui présente des trous (22) reliés à la conduite d'amenée (7) et dirigés vers la meule (2).

14. Dispositif selon la revendication 13, **caractérisé en ce que** les trous (22) de la surface de l'électrode (6) situées du côté de la meule (2) se trouvent sur des lignes voisines (24) en forme d'arcs de cercle et sont décalés les uns par rapport aux autres.

15. Dispositif selon la revendication 13 ou 14, **caractérisé en ce qu'**il comprend en outre une buse de nettoyage haute pression (18) qui est intégrée à la fixation (6') de l'électrode et par laquelle le liquide électrolytique de refroidissement et de lubrification peut être projeté sur la meule (2).

16. Dispositif selon l'une des revendications 9 à 15, **caractérisé en ce que** le moyen de production de courant électrique (11) fournit un courant continu (I) sans ondulations.

17. Dispositif selon l'une des revendications 9 à 16, **caractérisé en ce que** le liquide électrolytique de refroidissement et de lubrification est un concentré synthétique soluble dans l'eau, employé en solution à environ 5 % avec de l'eau déionisée, et **en ce que** cette eau a un pH d'environ 9 à 10 et une conductivité électrique d'environ 4 mS/cm.
